# EUROPÄISCHE PATENTSCHRIFT

(11) **EP 2 022 957 B1**
(45) Veröffentlichungstag und Bekanntmachung des Hinweises auf die Patenterteilung: **21.04.2010**
(21) Anmeldenummer: 07014703.8
(22) Anmeldetag: 26.07.2007
(51) Int. Cl.: F01N 13/14

(54) **Verfahren zur Herstellung eines Hitzeschildes**
Method of making a heat shield
Procédé de fabrication d'un bouclier thermique

(43) Veröffentlichungstag der Anmeldung: 11.02.2009
(73) Patentinhaber: REINZ-Dichtungs-GmbH, 89233 Neu-Ulm (DE)
(72) Erfinder: Schweiggart, Franz, 89284 Pfaffenhofen (DE); Dietrich-Radt, Thomas, 89346 Bibertal (DE); Gloeggler, Alexander, 89160 Tomerdingen (DE)
(74) Vertreter: Lang, Friedrich

(56) Entgegenhaltungen:
- EP-A- 1 775 437
- WO-A-00/46493
- WO-A-2004/098808
- DE-A1- 19 849 366
- DE-U1- 29 924 102

## Beschreibung

Die Erfindung betrifft ein Verfahren zur Herstellung eines Hitzeschildes zum Abschirmen eines Gegenstandes gegen Hitze und/oder Schall, der wenigstens eine Metalllage aufweist, wobei über wenigstens eine der Oberflächen derselben Noppen vorstehen.

Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallabsorber. Ein typischer Hitzeschild in Sandwich-Bauweise ist beispielsweise in der EP 1 775 437 A1 beschrieben.

Um Schall in ausreichendem Maß absorbieren und Wärme abschirmen zu können, weisen Hitzeschilde häufig eine wenigstens dreilagige Struktur auf. Die beiden Deckschichten bestehen in der Regel aus Metall, insbesondere aus Stahl, Aluminium-plattiertem Stahl oder einer Aluminium-(legierung). Zwischen den Deckschichten ist eine nicht-metallische Isolationsschicht eingebettet. Sie besteht zum Beispiel aus Glimmer oder Vermiculit, temperaturbeständiger Pappe, anorganischen oder organischen Faserverbundmaterialien oder anderen geeigneten Dämmstoffen wie beispielsweise Geweben, Gewirken und/oder Gestricken aus temperaturbeständigen Fasern. Die nichtmetallischen Einlagen bedeuten im Hinblick auf das Recycling der Hitzeschilde einen erhöhten Aufwand und sind daher oftmals nicht erwünscht.

Es sind auch Hitzeschilde bekannt, die ganz aus Metall bestehen und keine nicht-metallische Isolationsschicht aufweisen. Oft sind die Metalllagen so geformt, dass zwischen ihnen ein Resonanzraum gebildet wird, in dem Schall absorbiert werden kann. Gleichzeitig dient die zwischen den Metalllagen eingeschlossene Luftschicht als Isolationsschicht gegen Hitze. Die Resonanzräume werden beispielsweise gebildet, indem Noppen oder Rippen in eine oder beide Metalllagen eingeformt werden, die in Richtung auf die jeweils andere Metallschicht vorstehen. Außerdem ist es bekannt, Rippen oder Noppen zur Versteifung in die metallischen Lagen von Hitzeschilden einzuformen. Die WO 2004/098808 A1 offenbart beispielsweise die Herstellung eines Wärmeabschirmblechs durch Verformen und Verpressen mindestens eines regelmäßig strukturierten Blechrohlings mit einer weiteren Blechlage. Die DE 198 49 366 A1 beschreibt einen vergleichbaren Herstellungsvorgang und schlägt zur Herstellung eines Hitzeschildes ebenfalls die dreidimensionale Verformung regelmäßig vorstrukturierter Ausgangsmaterialien vor. Das Verfahren zum Herstellen eines schallabsorbierenden Isolationsteils gemäß der WO 00/46493 A1 betrifft die Herstellung einer flächigen regelmäßig gerasterten Folie, deren Formgebung über eine Noppenwalze und eine entsprechende Gegenwalze ermöglicht wird. Aus der DE 299 24 102 U1 ist schließlich ein Wärmeabschirmblech bekannt, bei dem zwei jeweils regelmäßig strukturierte Blechformteile punktuell miteinander verbunden sind.

Hitzeschilde weisen somit insbesondere in Abhängigkeit vom jeweiligen Einsatzfall eine starke dreidimensionale Verformung auf, die Spannungen im Hitzeschild zur Folge haben kann. Aufgrund der Vibrationen während des Betriebs können die Hitzeschilde insbesondere in den spannungsreichen Abschnitten beschädigt werden und Risse bilden, die bei fortlaufendem Betrieb oftmals weiter reißen, da die Hitzeschilde - auch im Hinblick auf die Material- und Gewichtseinsparung - so dünn wie möglich ausgelegt werden. Bei der dreidimensionalen Verformung der Hitzeschilde kommt es zudem häufig zu starker, oftmals nicht reproduzierbarer Faltenbildung, die die Reflexionseigenschaften der Hitzeschildoberfläche negativ beeinflusst. Außerdem können bereits während der Fertigung beim dreidimensionalen Verformen des Hitzeschildes aus einer ebenen Grundform heraus in sehr stark verformten Bereichen Risse auftreten, die den Hitzeschild von Anfang an unbrauchbar machen.

Versteifungsrippen oder Noppen können - wie erwähnt - helfen, die nötige Steifigkeit der metallischen Lagen zu erreichen. Im Falle von Noppen ist es bekannt, diese gleichmäßig und von gleicher Größe über die Metalllage zu verteilen. Damit verbessert sich zwar die Schutzwirkung und Stabilität des Hitzeschildes, jedoch werden die im vorstehenden Absatz genannten Probleme auf diese Weise nicht immer zuverlässig behoben. Tatsächlich tritt gerade im Bereich der Noppen ein besonders hoher Verformungsgrad auf, der zu einer erhöhten Gefahr der Rissbildung führt oder umgekehrt den Einsatz höherer Materialstärken erfordert, was sich aber hinsichtlich Kosten und Gewicht negativ auswirkt. Um Rissbildung in jedem Fall zu vermeiden, können die Noppen auch relativ klein ausgeführt werden. Dann ist jedoch die gewünschte Versteifung der Metalllage oft nicht zu erreichen, und auch die Schallabsorptionseigenschaften sind nicht optimal.

Es bestand daher Bedarf an einem Hitzeschild, der bei möglichst geringem Materialverbrauch und geringem Gewicht dennoch möglichst stabil ist, nicht zur Rissbildung neigt und guten Schall- und Hitzeschutz bietet. Weiterhin soll eine unkontrollierte Faltenbildung vermieden werden. **Aufgabe** der Erfindung ist es entsprechend, ein Verfahren zur Herstellung eines Hitzeschildes anzugeben, dass die Herstellung eines Hitzeschildes ermöglicht, der die obigen Nachteile nicht aufweist.

Die Lösung dieser Aufgabe gelingt mit dem Verfahren zur Herstellung eines Hitzeschildes gemäß Anspruch 1. Bevorzugte Weiterbildungen sind in den Unteransprüchen beschrieben.

Die Erfindung betrifft also ein Verfahren zur Herstellung eines Hitzeschildes zum Abschirmen eines Gegenstandes gegen Hitze und/oder Schall mit wenigstens einer Metalllage mit einer ersten und einer zweiten Oberfläche, wobei über wenigstens eine von denen eine Vielzahl von Noppen vorsteht. Erfindungsgemäß unterscheidet zumindest ein Teil der Noppen sich von den übrigen Noppen in seiner Größe. Die Größe und Verteilung der Noppen weist dabei über den gesamten Hitzeschild betrachtet keinen Musterrapport auf. Der Erfindung liegt dabei der Grundgedanke zugrunde, über die Fläche der Metalllage die Größe der Noppen und damit ihr Widerstandsmoment gegen Verbiegung an die jeweils zu erwartende lokale Beanspruchung der Metalllage anzupassen. Idealerweise wird die Noppengröße für jede der Noppen so gewählt, dass ihr Widerstandsmoment gerade ausreicht, der am Ort der Noppe zu erwartenden Biegebeanspruchung zu widerstehen. Die Noppe ist also jeweils nur gerade so groß wie nötig. Damit ist auch der Verformungsgrad der Metalllage, in die die Noppe eingeformt wird, nicht größer als unbedingt erforderlich. Eine unnötige Beanspruchung der Metalllage wird damit vermieden. Gleichzeitig sinkt die Gefahr der Rissbildung.

Mit einer Metalllage, in welche über ihre Fläche verteilt unterschiedlich große Noppen eingeformt sind, deren Größe exakt auf die zu erwartende lokale Biegebeanspruchung abgestimmt ist, wird nicht nur eine optimale Steifigkeit bei geringer Materialstärke erzielt, sondern auch die Schallweiterleitung und Schallabgabe an die Umgebung des Hitzeschildes ist deutlich reduziert. Die erhöhte Steifigkeit der Metalllage bedeutet eine verringerte Schwingung an ihrer Oberfläche, eine Verschiebung des Eigenfrequenzbereiches des Hitzeschildes und damit verminderten Schall.

Prinzipiell gilt, dass je größer die Noppe, desto größer ihr Widerstandsmoment. Besondere Bedeutung hat dabei die Höhe der Noppe. Das Widerstandsmoment einer Noppe ergibt sich als 1/12 B · H², wobei B die Noppenbreite und H ihre Höhe bezeichnen. Die Höhe der Noppe trägt also quadratisch zur Erhöhung des Widerstandsmoments bei. Aus diesem Grund ist es besonders bevorzugt, die Höhe der Noppen zu variieren, um das gewünschte Widerstandsmoment der Noppen einzustellen. Dies schließt jedoch nicht aus, dass die Noppengröße alternativ oder zusätzlich auf andere Weise geändert wird. Beispielsweise können auch die Noppenbreite oder die Flächenausdehnung der Noppen variiert werden. Die Noppenbreite wird dabei als Abstand zwischen den Noppenfüßen gemessen, welches die Punkte der Noppe sind, an denen die Steigung der Noppenflanken bei Null liegt und an welchen die Noppe beginnt, aus der Oberfläche der Metalllage, in welche sie eingeformt ist, hervorzusteigen. Die Noppenbreite ist hier der maximal mögliche Abstand zwischen sich gegenüber liegenden Noppenfüßen. Die Noppenhöhe ist der Abstand zwischen Noppenfuß und Noppenscheitel, wobei für den Fall, dass nicht alle Noppenfußpunkte in einer Ebene liegen, der maximale Abstand herangezogen wird. Die Flächenausdehnung der Noppe ist die von den Noppenfußpunkten begrenzte Fläche, projiziert in die Ebene der Metalllage, sollten die Noppenfußpunkte nicht ohnehin in der Ebene der Metalllage liegen.

Das Widerstandsmoment der Noppen kann zusätzlich oder alternativ auch über die Flankensteilheit der Noppen eingestellt werden. Die Flankensteilheit ist dabei der Winkel zwischen einer an der Noppenflanke anliegenden Tangente und der Gerade zwischen gegenüber liegenden Noppenfüßen, die von der Tangente geschnitten wird. Der Winkel wird vom Inneren der Noppe in Richtung auf die Flanke hin gemessen und beträgt in der Regel höchstens 90 °. Bei der Bestimmung der Flankensteilheit werden die Übergangsbereiche zwischen Noppenfuß und Flanke einerseits und Noppenscheitel und Flanke andererseits nicht berücksichtigt. Zweckmäßig wird die Flankensteilheit mit einer Tangente bestimmt, die auf halber Höhe zwischen Noppenfuß und Noppenscheitel an der Noppenflanke anliegt. Mit zunehmender Flankensteilheit steigt das Widerstandsmoment der Noppe an.

Die Form der Noppen ist grundsätzlich beliebig. Besonders leicht herzustellen sind runde oder gerundete Noppen. Es sind jedoch auch vieleckige Formen denkbar. Besonders bevorzugt sind kreisrunde oder ovale Formen. Sämtliche Formen können auch miteinander kombiniert auf einer Metalllage verwendet werden. Bei Noppen, die eine Form aufweisen, die nicht punktsymmetrisch ist, ist es außerdem möglich, eine richtungsabhängige Variation der Eigenschaften der Metalllage zu erzielen. Beispielsweise kann durch Noppen, die eine größere Länge als Breite aufweisen, eine höhere Versteifung in Längsrichtung als in Breitenrichtung erhalten werden. Besonders geeignet für solche Effekte sind ovale Noppen. Derartige unsymmetrische Noppen werden bevorzugt in Bereichen sehr hoher Biegebeanspruchung angeordnet. Die Längsachse der Noppe stimmt dabei zweckmäßig mit der Richtung des Hebels der Biegebeanspruchung überein.

Die Noppen können nur über eine der Oberflächen der Metalllage vorstehen oder über beide Oberflächen. Aus Platzgründen und aus Gründen der leichteren Herstellbarkeit ist es bevorzugt, die Noppen nur zu einer Seite der Metalllage hin auszubilden.

Eine besonders wirksame Versteifung der Metalllage wird erreicht, wenn die Noppen gestaffelt über die Fläche der Metalllage verteilt sind. Die Staffelung erfolgt dabei zweckmäßig so, dass in den Zwischenräumen zwischen den Noppen keine über die Metalllage durchgehende gerade Linie gezogen werden kann. In der Praxis verläuft damit über die Metalllage hinweg keine durchgängige Biegelinie, an der die Metalllage leicht verformt werden könnte. Auf diese Weise ist daher eine besonders gute Aussteifung möglich.

In der Praxis erfolgt die Festlegung der Noppengröße in Abhängigkeit von der lokalen Biegespannung in der Metalllage in der Weise, dass die Grenzspannung der Metalllage nicht überschritten wird. Die Grenzspannung ist diejenige Spannung, bei der unter Biegebelastung im Metall gerade noch keine Risse auftreten. Die Grenzspannung ist abhängig von der Art des verwendeten Ausgangsmaterials. Konkret handelt es sich um eine Materialkonstante des für die Herstellung der Metalllage eingesetzten Metallblechs, nämlich dessen Zugfestigkeit. Als Grenzspannung wird der Wert der Zugfestigkeit des noch nicht dreidimensional verformten, ebenen Ausgangsblechs herangezogen. Da das Widerstandsmoment des Materials durch dreidimensionale Verformung zunimmt, ist die Grenzspannung des unverformten Ausgangsmaterials in jedem Fall geringer als diejenige des verformten Materials und damit als Grenzwert auch des dreidimensional verformten Materials sicher einsetzbar.

Um nun die jeweilige Grenzspannung für die verschiedenen Bereiche der Metalllage zu ermitteln, wird zweckmäßig wie folgt vorgegangen: Die beabsichtigte Verwendung des Hitzeschildes, die Art seiner Befestigung und die zu erwartende Biegebelastung in dieser Einbausituation sind grundsätzlich bekannt oder können zumindest näherungsweise abgeschätzt werden. Hierbei wird von einer sich aus der Einbausituation ergebenden dreidimensionalen Verformung des Hitzeschildes ausgegangen, in der die Metalllage eine konstante Dicke aufweist und in der noch keine Noppen in der Metalllage vorhanden sind. Für diesen theoretischen dreidimensional verformten Hitzeschild wird die sich aus der Schwingungsanregung ergebende Biegespannung berechnet, wofür zum Beispiel die Finite Elemente-Methode eingesetzt werden kann. Diese Biegespannung kann entweder für die gesamte Oberfläche des Hitzeschildes berechnet werden oder nur für einzelne, gezielt ausgewählte Punkte oder Bereiche der Oberfläche. Im letzteren Fall kann der Rechenaufwand reduziert werden.

Aus der Berechnung ergibt sich ein Flächenmuster der Verteilung der Biegespannung über den Hitzeschild. Auf diese Weise lassen sich auch Bereiche besonders hoher Biegespannung erkennen, welche durch eine oder mehrere Versteifungsnoppen verstärkt werden sollten. Aus diesem Flächenmuster ergibt sich also einerseits der geeignete Anbringungsort der Noppen über die Fläche des Hitzeschildes und andererseits die geeignete Form dieser Noppen, also deren Höhe, Flächenausdehnung, Breite und/oder Flankensteilheit. Letztere werden so festgelegt, dass sie der ermittelten Biegespannung im jeweiligen Bereich angepasst sind. Höhe, Breite, Flächenausdehnung und Flankensteilheit der Noppe werden dabei so ausgelegt, dass sich für die Noppe ein Widerstandswert ergibt, der groß genug ist, um der ermittelten Biegespannung zu widerstehen und die Auslenkung durch die Schwingungseinleitung zu kompensieren. Anhand dieser ermittelten Werte werden anschließend die Noppen in die Metalllage eingeformt. Dies geschieht bevorzugt gemeinsam mit der dreidimensionalen Verformung der Metalllage. Der für die Berechnung benutzte dreidimensional verformte Hitzeschild ohne eingeprägte Noppen ist dagegen, wie bereits erwähnt, ein rein theoretisches Konstrukt und dient nur zur Ermittlung der Noppengröße und der Verteilung der Noppen im erfindungsgemäßen Hitzeschild.

Bei der beschriebenen Berechnung der Noppengröße dient die zu erwartende Biegespannung im eingebauten Zustand des Hitzeschildes als Berechnungsgrundlage. Die Biegespannung ergibt sich bekanntlich aus einem Quotienten von Biegemoment und Widerstandswert. Der Widerstandswert wird von Aufbau und Form des Hitzeschildes bestimmt. Biegemoment und Biegespannung sind proportional zueinander. Aufgrund dessen könnte anstelle der Biegespannung auch das Biegemoment in die Berechnung Eingang finden. Beide Berechnungsarten sind daher grundsätzlich als äquivalent anzusehen.

Erfindungsgemäß wird bei der Abschätzung der Biegespannung, die auf den dreidimensional verformten Hitzeschild einwirkt, bevorzugt von der Balkentheorie ausgegangen. Anhand der Balkentheorie kann hier - wie in der Konstruktions- und Festigkeitslehre grundsätzlich üblich - die Belastbarkeit des Hitzeschildes unter Zuhilfenahme der Berechnung für ein auf einen Biegebalken einwirkendes Biegemoment abgeschätzt werden. Dabei wird die Belastungssituation des eingebauten Hitzeschildes simuliert, und ausgehend von dieser Abschätzung wird der Hitzeschild durch Noppen so versteift, dass die maximal zu erwartende Belastbarkeit nicht erreicht wird. Die Berechnung nach der Biegebalkenmethode dient dabei zur Ermittlung dieser Grenzspannung - der maximal möglichen Biegespannung im Hitzeschild, die nicht zu unerwünschten Verformungen, Rissbildung etc. führt. Je größer das Biegemoment, desto größer muss der Widerstandswert des Hitzeschildes an dieser Stelle sein, damit die Grenzspannung nicht erreicht wird. Anhand dieses Verfahrens ist es also möglich, neben der optimalen Lage der Noppen auch deren Höhe, Breite, Flächenausdehnung und Flankensteilheit so festzulegen, dass diese gerade ausreichen, der zu erwartenden Biegespannung zu widerstehen. Eine Überdimensionierung der Noppen und damit eine unnötige Umformung des Ausgangsmaterials kann auf diese Weise vermieden werden.

Wie vorstehend beschrieben, geht in die Abschätzung der Biegespannung die Schwingungsanregung ein, die zu einem auf den Hitzeschild wirkenden Biegemoment führt. Nach der Balkentheorie erster Ordnung wird dabei nur eine senkrecht zur Balkenlängsachse wirkende Kraft berücksichtigt. Zusätzlich zu den zu erwartenden Biegemomenten können theoretisch auch Torsionsspannungen, Vibrationen oder thermische Belastungen berücksichtigt werden. Wegen des deutlich erhöhten Rechenaufwands ist dies jedoch nicht bevorzugt.

Aus den Berechnungen nach obigem Verfahren hat sich für die meisten Hitzeschilde ergeben, dass Noppen sinnvoller Weise in Bereichen einer Biegespannung von 50 bis 500 N/mm² und insbesondere von 60 bis 400 N/mm² eingeformt werden. Die Biegespannung bezieht sich dabei auf die Metalllage vor dem Einbringen der Noppen. Durch das Einbringen der Noppen in die Metalllage kann die Biegespannung auf 60 bis 300 N/mm² reduziert werden.

In biegespannungsarmen Bereichen ist eine Noppalierung nicht unbedingt erforderlich bzw. es reicht schon eine Anordnung kleiner Noppen mit großen Abständen. An einigen Stellen ist auch die Versteifung aufgrund der Gesamtverformung des dreidimensionalen Hitzeschildes, die sich bei mehrlagigen Hitzeschilden nicht auf eine einzelne Lage beschränkt, ausreichend. Aus diesem Grunde weist üblicherweise nicht die gesamte Hitzeschild-Oberfläche Noppen auf, oft kann es ausreichen, wenn 30 %, bevorzugt 40 %, besonders bevorzugt mindestens die Hälfte der Oberfläche der Hitzeschild-Lage von noppalierten Bereichen überzogen ist. Die Werte beziehen sich dabei auf den Hüllkreis einer noppalierten Fläche, nicht auf den Oberflächenanteil, der tatsächlich aus der Hitzeschild-Lagen-Ebene herausgeformt ist. Besonders anfällig für Verbiegungen und Knicke. sind insbesondere Übergangsbereiche zwischen freien, nur wenig verformten Lappen und einem breiteren, dreidimensional stärker verformten oder durch Rippen verstärkten Bereich und werden deshalb durch Noppalierung besonders verstärkt. Hier sitzen die Noppen besonders eng. Nachdem eine versetzte Anordnung mittels ovaler Noppen leichter realisiert werden kann, werden diese in jenen Bereichen besonders häufig eingesetzt.

Nachfolgend sollen einige konkrete Zahlenwerte für die Abmessung der Noppen angegeben werden. Die Werte für Noppenhöhe, -durchmesser (-breite), Flächenausdehnung, Flankensteilheit (Flankenwinkel) und Noppenabstand können jeweils für sich allein oder auch in Kombination miteinander vorliegen. Für stark belastete Bereiche mit einer Biegespannung von 160 N/mm² bis 500 N/mm² werden bevorzugt Noppenhöhen von 2,5 bis 15 mm und insbesondere 3 bis 10 mm gewählt. In geringer beanspruchten Bereichen mit einer Biegespannung von kleiner als 120 N/mm² sind Noppenhöhen von 1 bis 8 mm, insbesondere 3 bis 6 mm, geeignet. Die Flächenausdehnung liegt im Bereich einer Biegespannung von 160 N/mm² bis 500 N/mm² bei 50 bis 1300 mm² und insbesondere 110 bis 320 mm². Eine Flächenausdehnung von 12 bis 200 mm², insbesondere 25 bis 110 mm², ist im Bereich einer Biegespannung von kleiner als 120 N/mm² geeignet. Ein relativ großer Durchmesser von 4 bis 20 mm, insbesondere 6 bis 10 mm, wird zweckmäßig im Bereich einer Biegespannung von 160 N/mm² bis 500 N/mm² verwendet, während kleinere Durchmesser von 2 bis 8 mm, insbesondere 3 bis 6 mm, im Bereich einer Biegespannung von kleiner als 120 N/mm² bevorzugt sind. In Bereichen einer mittleren Biegespannung mit Werten im Zwischenbereich der angegebenen Werte werden ebenfalls zwischen den Bereichen liegende mittlere Abmessungen gewählt. Zudem haben sich Flankenwinkel von 20 bis 90 °, insbesondere 30 bis 60 °, und ein Abstand der Noppenscheitelpunkte von 2,5 bis 30 mm, insbesondere 6 bis 15 mm, bewährt. In der Regel werden 1 bis 10, insbesondere 1 bis 6, Noppen pro Quadratzentimeter der Metalllage vorhanden sein. Bei ovalen Noppen beträgt die Längsausdehnung bevorzugt maximal dem 3fachen, besonders bevorzugt maximal dem doppelten und insbesondere dem 1,5fachen der Querausdehnung.

In den genannten Wertebereichen kann sichergestellt werden, dass durch Einbringen der Noppen eine zu große Umformung des Ausgangsmaterials vermieden wird. Üblicherweise werden die beschriebenen Noppengrößen mit einer Materialdehnung von höchstens 5 % erreicht. Risse im Ausgangsmaterial treten üblicherweise erst bei ca. 30 % Dehnung auf. Erfindungsgemäß gelingt es, die Noppen so an die vorgefundenen Gegebenheiten anzupassen, dass eine optimale Steifigkeit bei möglichst geringem Umformgrad der Metalllage, in welche die Noppen eingeformt sind, erzielt wird. Aufgrund der optimierten Abmessungen der Noppen im erfindungsgemäßen Hitzeschild muss also das Ausgangsmaterial weniger stark umgeformt werden, als dies bislang im Stand der Technik üblich war. Eine unnötige Materialbeanspruchung und Materialverdünnung des Ausgangsmaterials kann auf diese Weise verhindert werden. Damit verringert sich jedoch die Gefahr der Rissbildung sowohl bei der Herstellung des Hitzeschildes als auch im späteren Einsatz desselben deutlich. Umgekehrt kann zur Herstellung des Hitzeschildes die Materialstärke verringert werden, wenn die Bildung von Rissen und Falten im Hitzeschild zuverlässig ausgeschlossen werden soll. Dies verringert die Kosten und das Gewicht des Hitzeschildes.

Zusätzlich können die Noppen nicht nur unter Berücksichtigung der Biegespannung ausgebildet werden, sondern auch unter Berücksichtigung der zu erwartenden Wärmebelastung. So wird insbesondere die Höhe der Noppen in Abhängigkeit vom Abstand zu der Wärmequelle, gegen die der vom Hitzeschild abzuschirmende Gegenstand geschützt werden soll, festgelegt. Je dichter der Oberflächenbereich der Metalllage dabei der Wärmequelle kommt, desto größer ist zweckmäßig die Höhe der Noppen in diesem Bereich. Dadurch wird einerseits eine bessere Aussteifung erreicht, um der thermischen Schwächung des Materials der Metalllage entgegenzuwirken, und andererseits erhöht sich die Schichtdicke der Isolation.

Sinnvoll ist es außerdem, die Noppen in Bereichen mit speziellen Funktionen entsprechend dieser Funktion auszulegen. Beispielsweise kann es vorteilhaft sein, die Höhe der Noppen zum Außenrand der Metalllage hin zu verringern, um in diesem Bereich die Verbindung mit weiteren Lagen des Hitzeschildes nicht zu erschweren. Sehr hohe Noppen im Außenrandbereich könnten beispielsweise ein Umbördeln des Randes der einen Metalllage um eine andere herum beeinträchtigen. Auch im Bereich um eine Befestigungsmittelöffnung, die zur Aufnahme einer Schraube oder ähnlichem dient, mit der der Hitzeschild an einem anderen Bauteil verschraubt wird, können zu große, insbesondere zu hohe Noppen die Befestigung erschweren. Hier sind eher niedrige oder mittelhohe Noppen von Vorteil. Besonders bevorzugt ist es aber, in einem Bereich von 4 mm, bevorzugt 6 mm um die Befestigungsmittelöffnung herum vollständig auf Noppen zu verzichten.

Zweckmäßig kann es außerdem sein, in Bereichen zwischen hohen und niedrigen Noppen kontinuierliche Höhenänderungen vorzusehen, um sprunghafte Änderungen zu vermeiden. Zwischen den Bereichen hoher und niedriger Noppen werden also mittelhohe Noppen vorgesehen, deren Höhe sich allmählich den Höhen der benachbarten Noppen annähert. Dies ist besonders dann sinnvoll, wenn an den Noppenscheiteln eine weitere Lage des Hitzeschildes anliegt.

Die Erfindung kann auf ein- oder mehrlagige Hitzeschilde angewendet werden. Neben metallischen Lagen können auch nichtmetallische Isolationsschichten wie bisher im Stand der Technik üblich eingesetzt werden. Im Falle mehrerer metallischer Lagen können eine, mehrere oder alle Metalllagen Noppen unterschiedlicher Größe aufweisen, wobei die Noppen benachbarter Lagen aufeinander zu oder voneinander weg weisen können. Ein bevorzugtes Beispiel ist ein zweilagiger Hitzeschild, in dem nur eine Metalllage Noppen aufweist, die andere Metalllage dagegen eine Mikroperforation. Mikroperforierte Metalllagen in Hitzeschilden sind grundsätzlich bekannt. Sie weisen üblicherweise in Richtung auf eine Schallquelle. Die Noppen der genoppten, ersten Metalllage weisen bevorzugt in Richtung auf die gelochte Metalllage, wobei ihre Scheitel an der zweiten Metalllage anliegen. Dadurch entsteht zwischen beiden Metalllagen ein Resonanzraum, dessen Form und Größe durch die gezielte Ausbildung der Noppen eingestellt werden kann. Damit lassen sich die Schallabsorptionseigenschaften gezielt vorgeben.

Daneben ist aber auch die Herstellung zweilagiger Hitzeschilde möglich, die aus zwei genoppten Lagen bestehen. Die beiden Lagen weisen dabei bevorzugt eine unterschiedliche Noppalierung auf, um so eine noch bessere Versteifung zu bewirken. Üblicherweise sind die beiden Lagen so zueinander ausgerichtet, dass die Noppen der beiden Lagen nicht ineinander greifen. Weiterhin sind auch zweilagige Hitzeschilde aus einer genoppten Lage und einer Lage ohne Mikrostrukturierung verwendbar.

Ein weiteres Beispiel eines mit einem erfindungsgemäßen Verfahren hergestellten Hitzeschildes ist ein dreilagiger Hitzeschild mit zwei metallischen Decklagen, die bevorzugt beide in der beschriebenen Weise mit Noppen versehen sind, und einer Mittelschicht aus nichtmetallischem Isolationsmaterial. Die Noppen weisen bevorzugt zum Inneren des Hitzeschildes.

Als Materialien für den erfindungsgemäßen Hitzeschild können die bisher üblichen verwendet werden. Die wenigstens eine metallische Lage besteht zum Beispiel aus Stahl, aluminiumplattiertem Stahl oder Aluminium(-legierungen). Feueraluminierter Stahl ist besonders weit verbreitet. Edelstähle werden für Einsatzgebiete mit Korrosionsrisiko und höherer Temperaturbelastung bevorzugt, nickelreiche Stähle für Hochtemperaturanwendungen. Aluminiumplattierter Stahl weist besondere Reflexionseigenschaften auf. Bevorzugt unter den genannten Materialien sind Tiefziehbleche mit Feueraluminierung. Die wenigstens eine Metalllage des Hitzeschildes weist üblicherweise eine Dicke von 0,1 bis 2 mm, bevorzugt 0,2 bis 1,5 mm, auf. Bei mehr als einer Metalllage ist es von der jeweiligen Anwendung abhängig, ob gleiche Blechstärken oder unterschiedliche Blechstärken für beide Lagen gewählt werden. Die Wahl der individuellen Blechstärken erfolgt in Abhängigkeit von der für die dreidimensionale Verformung notwendigen Elastizität und der für das verformte Bauteil notwendigen Steifigkeit so, dass eine Rissbildung im fertigen Teil unter Einsatzbedingungen vermieden wird.

Die Noppen werden beim erfindungsgemäßen Herstellungsverfahren bevorzugt in die Metalllage eingeprägt. Dies kann gleichzeitig mit der dreidimensionalen Verformung des Hitzeschilds in seine Endform geschehen oder in einem gesonderten Schritt. Sollte durch anschließendes dreidimensionales Verformen auch eine Verformung der Noppen zu erwarten sein, kann dies vorab bei der Auslegung der Noppen berücksichtigt werden. Die Noppen können also beispielsweise zunächst höher als nötig ausgelegt werden, um ein Abflachen bei der späteren dreidimensionalen Verformung der Metalllage zu kompensieren. Es wird in keinem Fall ein Rohling mit regelmäßig gerasterter Noppengröße und -verteilung verwendet. Zur Erzeugung der Noppen können in an sich bekannter Weise zwei komplementäre Prägeformen verwendet werden, zwischen die das plane Ausgangsmetallblech eingelegt wird. Zur Herstellung der Noppen werden Stempel in entsprechende Hohlräume mit der gewünschten Noppenform oder einer größeren Freimachung der gegenüberliegenden Prägeform gedrückt. Eine analoge Formgebung ist mittels Tiefziehens ebenfalls möglich.

Eine andere Möglichkeit der Noppenerzeugung besteht darin, auf beiden gegenüberliegenden Prägeformen gegeneinander versetzte Stifte vorzusehen. Die Stifte der einen Form liegen dabei dort, wo sich in der Metalllage die Noppenscheitel befinden sollen. Die Stifte der anderen Form dienen als eine Art Niederhalter für die Metalllage und befinden sich in Zwischenräumen zwischen den Noppen. In diesem Fall der Noppenherstellung werden Noppen mit relativ sanft ansteigenden Flanken und relativ geringem Umformgrad des Materials erzeugt. Höhere Stifte führen in der Regel auch zu Noppen mit einer größeren Flächenausdehnung. Die Stifte der einen Formen sind jeweils gestaffelt zu den Stiften der anderen Form angeordnet. Geeignete Stiftdurchmesser liegen im Bereich von 0,5 bis 4 mm, insbesondere 1 bis 3 mm. Ihre Höhe beträgt bevorzugt 1 bis 15 mm und besonders bevorzugt 1,5 bis 8 mm. Der Abstand der Stifte innerhalb einer Form liegt zweckmäßig zwischen 2 und 30 mm, insbesondere bei 4 bis 15 mm. Die Stifte der gegenüberliegenden Form sind bevorzugt genauso wie die der anderen Form ausgebildet und sitzen möglichst exakt mittig auf Lücke zwischen den Stiften der gegenüberliegenden Form.

Besitzt der Hitzeschild eine nichtmetallische Isolationsschicht, besteht diese wie im Stand der Technik beispielsweise aus Glimmer oder Vermiculit, temperaturbeständiger Pappe, anorganischen oder organischen Faserverbundmaterialien oder anderen geeigneten Dämmstoffen wie beispielsweise Geweben, Gewirken und/oder Gestricken aus temperaturbeständigen Fasern.

Auch die Verbindung der Lagen kann auf übliche Weise erfolgen. Beispielsweise können zwei metallische Lagen so über einen Falz miteinander verbunden werden, dass eine Lage gegenüber der anderen Lage einen Überstand aufweist und dieser Überstand um den Rand der anderen Lage herum gebogen wird. Beim Umbiegen des Überstandes wird dabei eine gegebenenfalls vorhandene Isolationsschicht zwischen den beiden metallischen Lagen festgehalten. Beispiele sind in der EP 1775437 A1 und der DE 202007007453 U der Anmelderin beschrieben.

Der erfindungsgemäße Hitzeschild kann aus einem einzigen Teil oder mehreren Teilen bestehen, im letzteren Fall können die verschiedenen Teile insbesondere über Schraub- und Steckverbindungen miteinander befestigt werden. Steckverbindungen werden dabei häufig unter Zuhilfenahme von Clipsen realisiert. Bei aus mehreren Teilen gebildeten Hitzeschilden kann es, je nach individueller Gestaltung, ausreichend sein, wenn nur ein einzelnes Teil die erfindungsgemäße Noppengestaltung aufweist.

Der erfindungsgemäße Hitzeschild wird üblicherweise im Bereich von Verbrennungsmotor und Abgasstrang in Kraftfahrzeugen verwendet. Der Hitzeschild kann dabei zum Abschirmen des Abgaskrümmers, des Turboladers sowie von Anbauteilen wie Katalysator, Vorkatalysator, Partikelfilter oder sonstiger Komponenten eingesetzt werden.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen.

In den Figuren zeigen schematisch:
- Figur 1: in drei Teilfiguren 1-a bis 1-c Ausschnitte auf eine perspektivische Ansicht eines erfindungsgemäßen Hitzeschildes in verschiedenen Ausführungsformen,
- Figur 2: einen Teilquerschnitt durch einen mit Erhebungen versehenen Bereich eines Ausführungsbeispiels eines einlagigen erfindungsgemäßen Hitzeschildes im Bereich einer Befestigungsmittelöffnung;
- Figur 3: einen Teilquerschnitt durch einen mit Erhebungen versehenen Bereich eines Ausführungsbeispiels eines zweilagigen erfindungsgemäßen Hitzeschildes im Bereich einer Befestigungsmittelöffnung;
- Figur 4: eine perspektivische Ansicht einer dreidimensional verformten Metalllage vor Einformen von Noppen zur Verdeutlichung der lokalen Biegespannungen und
- Figur 5: einen Graphen der Noppenhöhe in Abhängigkeit von der Biegespannung im Bereich der Linie A-A der Figur 4.

In den Teilfiguren sind die Noppen teilweise so gezeichnet, dass sie auf einem Raster verteilt sind und durch mehrere Noppen hindurch jeweils diagonale Linien gezogen werden können. Diese Vereinfachung hat ausschließlich darstellerische Gründe. Im realen Hitzeschild sind die Noppen bevorzugterweise alle so angeordnet, dass keine durchgängige Linie durch die Schwerpunkte mehrere Noppen hindurch gezogen werden kann. Die versetzte Anordnung der Noppen sorgt für eine zusätzliche Versteifung des Hitzeschilds.

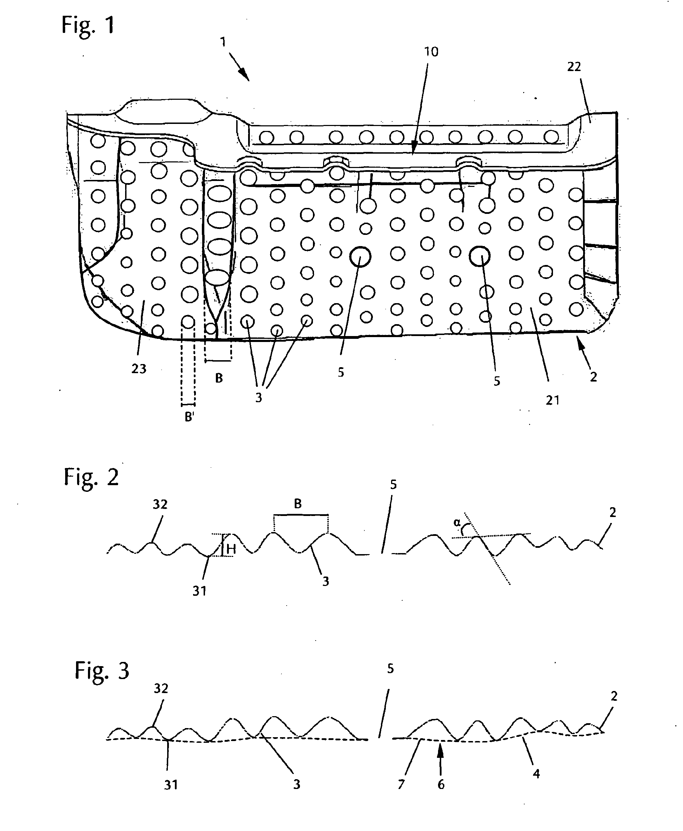

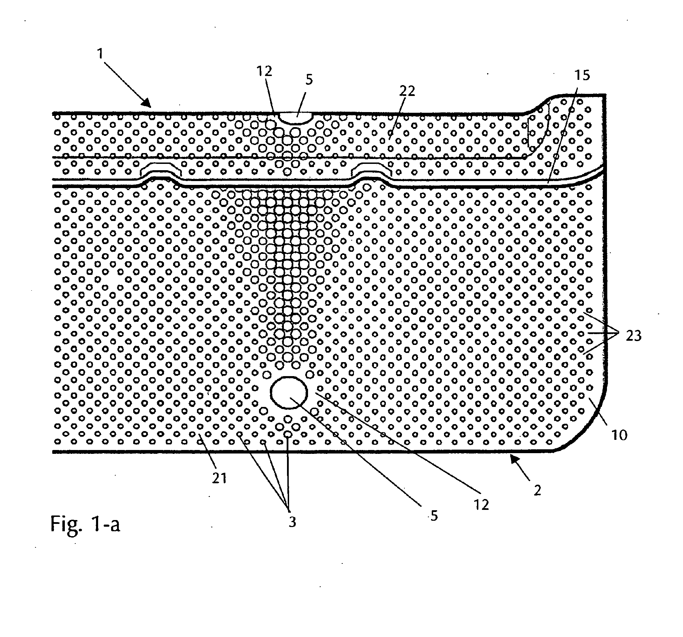

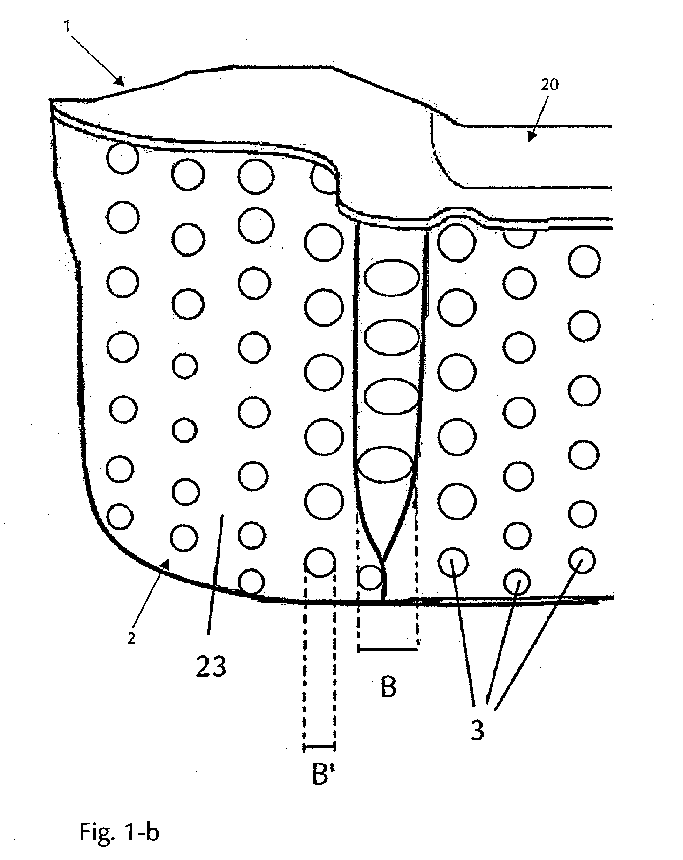

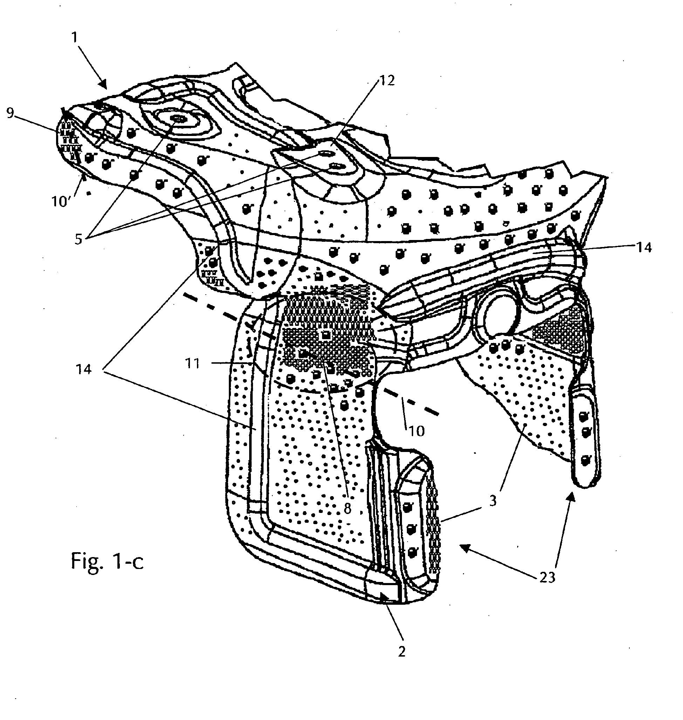

Figur 1-a zeigt einen Ausschnitt aus einem einlagigen erfindungsgemäßen Hitzeschild 1. Der Hitzeschild umfasst eine metallische Lage 2, die zum Beispiel aus feueraluminiertem Stahl besteht. Der Hitzeschild 1 weist im Wesentlichen eine unsymmetrisch sattelartige Form auf. Die dreidimensionale Verformung wurde durch Prägen aus einer flächigen und ebenen Vorform erzeugt. Bei dem Hitzeschild 1 handelt es sich beispielsweise um einen solchen, der im Bereich eines Abgasstranges eines Kraftfahrzeuges verwendet wird. Für die Befestigung in diesem Bereich sind im Hitzeschild 1 Befestigungsmittelöffnungen 5 vorhanden, durch welche hindurch Befestigungsschrauben geführt und beispielsweise mit der Karosserie verschraubt werden.

In die Metalllage 2 ist eine Vielzahl von Noppen 3 eingeprägt. Die Noppen 3 weisen hier alle eine runde Form auf. Die Noppen 3 sind im Wesentlichen gleichmäßig über die Fläche der Metalllage 2 verteilt. Lediglich im Außenrandbereich 10 des Hitzeschildes 1 sowie im Randbereich 12 um die Befestigungsmittelöffnungen 5 sind keine Noppen vorhanden. Die Noppen 3 stehen über die Oberfläche 21 vor. Im Bereich der auf den Betrachter zuweisenden und größtenteils sichtbaren Oberfläche 21 sieht der Betrachter also auf die Erhebungen der Noppen, während er in dem schmalen Streifen am oberen Bildrand, der von der Oberfläche 22 sichtbar ist, in die Noppenvertiefungen hineinsieht.

Wie bereits in Figur 1-a erkennbar, unterscheiden sich die Noppen 3 in ihrer Größe voneinander. Große Noppen mit einem hohen Widerstandsmoment sind in den Bereichen der Metalllage 2 vorhanden, die einer starken Biegespannung ausgesetzt sind. Ein solcher Bereich ist zum Beispiel ungefähr in der Mitte des Ausschnitts im Wesentlichen von oben nach unten zwischen den Befestigungsmittelöffnungen 5 verlaufend erkennbar. Hier sind deutlich größere Noppen mit einer wesentlich größeren Dichte als in den anderen Bereichen angeordnet. Die Größe und Dichte nimmt dabei von unten bis in den Bereich des Sattels zu und nimmt dann in Richtung der nach vorne zeigenden Kante 15 wieder ab.

Figur 1-b zeigt einen Ausschnitt aus einem zweilagigen Hitzeschild 1, bei dem nur die Lage 2 noppaliert ist. Die Lage 20, die im oberen Bereich der Darstellung nach vorne zeigt, weist nur die für einen Hitzeschild üblichen makroskopischen dreidimensionalen Verformungen auf. In einem Bereich etwas rechts von der Mitte sind die Noppen 3 in der Lage 2 oval ausgeprägt, während in den übrigen Bereichen runde Noppen 3 unterschiedlicher Größe Verwendung finden. Die Breite B dieser ovalen Noppen ist größer als die Breite B' der benachbarten Noppen. Die Noppen sind dabei so gerichtet, dass die größte Breite B in gleicher Richtung wie die Hebelkräfte der in diesem Bereich auf der Metalllage 2 angreifenden Biegespannung verlaufen. Zu den Außenrändern hin nimmt die Noppengröße ab. Die Noppen sind im realen Hitzeschild bevorzugt so angeordnet, dass sich zwischen ihren Mittelpunkten kein durchgehender Linienverlauf ergibt. Der Hitzeschild ist damit gut gegen Verbiegung entlang einer in Längsrichtung verlaufenden Biegelinie geschützt. Gegen Verbiegung in Querrichtung schützt den Hitzeschild seine sattelartige Form.

Figur 1-c zeigt wiederum einen Ausschnitt aus einlagigen Hitzeschild 1, dieser weist zusätzlich zu einer sattelähnlichen Form zwei in der Darstellung nach unten zeigende Lappen 23 auf. Die Übergangsbereiche von der sattelähnlichen Form zu den Lappen weisen eine besonders hohe Biegespannung auf und sind besonders anfällig gegen Verformung, ja gar Knicken. Dies wird durch die theoretische Biegelinie 10 dargestellt. In ihrem Bereich sowie dessen Nachbarschaft, angedeutet durch das Oval 11, besitzt der Hitzeschild eine besonders hohe Dichte an Noppen 3, die unterschiedliche Größen und Formen besitzen, da hiermit besonders einfach vermieden werden kann, dass zwischen den Erhebungen noch durchgängige Linien bestehen bleiben, die als potentielle Knicklinie in Betracht kommen. Auch im Bereich des links nach oben zeigenden abgerundeten Ecks 9 spannt sich eine, allerdings deutlich kürzere theoretische Biegelinie 10' auf, die ebenfalls durch Vorsehen dicht beieinander liegender ovaler Noppen abgesichert wird. Die Bereiche 12 um die Befestigungsmitteldurchgangsöffnungen 5 sind ebenso wie die aufgrund der stark ausgeprägte Rippenstruktur verstärkten Bereiche 14 von Noppen ausgespart. Figur 1-c demonstriert überdies, dass die Noppalierung bevorzugterweise so vorgesehen wird, dass keine Regelmäßigkeit entsteht.

Figur 2 zeigt einen Querschnitt durch einen einlagigen Hitzeschild im Bereich einer Befestigungsmittelöffnung 5. Hier ist erkennbar, dass die Noppen 3 nicht nur eine unterschiedliche Flächenausdehnung, sondern auch eine unterschiedliche Höhe und Flankensteilheit besitzen. Die Höhe H der Noppen (der größte Abstand zwischen Noppenscheitel 31 und Fußpunkt 32 der Noppe 3) nimmt mit zunehmender Biegespannung im Hitzeschild zu. Auch die Flankensteilheit der Noppen 3 ändert sich. Ein größerer Flankenwinkel α (zwischen einer auf Mitte der Flanke angelegten Tangente und einer Gerade zwischen sich gegenüber liegenden Fußpunkten der Noppe) verringert das Widerstandsmoment der Noppe und erhöht die Verformbarkeit der Metalllage 3. Durch Einstellung von Noppenhöhe, Noppengröße, Noppenbreite (Flächenausdehnung) und Flankensteilheit im Hinblick auf die errechnete Biegebeanspruchung über die Fläche der Metalllage 2 kann die Steifigkeit der Metalllage gezielt den Erfordernissen angepasst werden. Die Noppen sind also nur gerade so groß, wie es nötig ist, um die geforderten Eigenschaften der Metalllage zu erhalten.

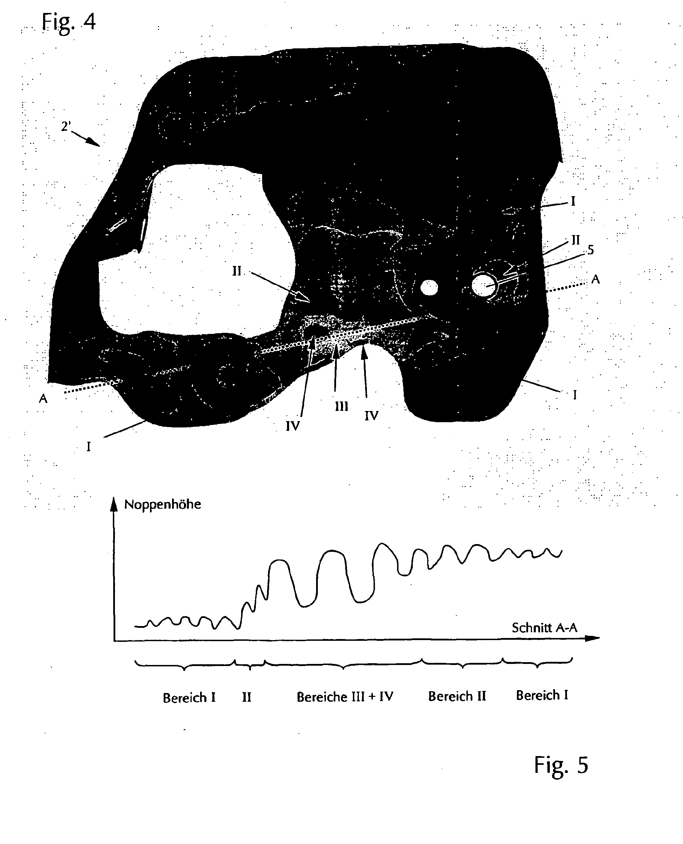

Figuren 4 und 5 sollen dieses Vorgehen weiter erläutern. Figur 4 zeigt eine theoretische Vorform 2' einer Metalllage 2. Es handelt sich lediglich um ein Modell, das zur Berechnung der lokalen Biegespannung über die Fläche der Metalllage 2 dienen soll. Diese Vorform 2' weist zwar schon die dreidimensionale Form der fertigen Metalllage 2 auf, es sind jedoch keine Noppen eingeformt. Außerdem wird rechnerisch von einer einheitlichen Materialdicke ausgegangen. Anhand dieser Vorform wird nach der Finite Elemente-Methode über die gesamte Fläche der Vorform nach der Biegebalken-Theorie die jeweils örtlich zu erwartende Biegespannung errechnet. Anhand der errechneten lokalen Biegespannung wird festgelegt, in welche Bereiche der Metalllage 2 Noppen eingebracht werden müssen, damit die Grenzspannung des Materials der Metalllage 2 nicht überschritten wird. Entsprechend diesen Werten wird die Größe der benötigten Noppen festgelegt. Je höher die zu erwartende Biegespannung, desto höher, breiter und steiler wird die Noppe ausgelegt.

In Figur 4 sind die Bereiche geringster Biegespannung mit I bezeichnet. Die Biegespannung nimmt über die Bereiche II und III bis zum Bereich IV hin zu, wo die größte Biegespannung vorherrscht. Figur 5 verdeutlicht schematisch das Ergebnis der Festlegung der Noppenhöhe in Bezug auf die Biegespannung für den Bereich entlang der Linie A-A in Figur 4. Wie erkennbar, nehmen Noppenhöhe und -breite vom Bereich I in Richtung auf den Bereich IV zu, wo die größte Noppenhöhe und -breite vorhanden sind.

Figur 3 schließlich zeigt noch ein Beispiel eines zweilagigen Hitzeschildes. Der gezeigte Ausschnitt entspricht demjenigen der Figur 2. Zusätzlich ist hier nun jedoch eine weitere Metalllage 4 vorhanden, die an den Scheiteln 31 der Noppen 3 anliegt. Die zweite Metalllage 4 weist einen mit Mikrolöchern 7 versehenen gelochten Bereich 6 auf, der sich hier im Wesentlichen über den gesamten gezeigten Ausschnitt erstreckt. Die Mikrolochung erlaubt die Absorption von Schall, der in den Löchern 7 aufgenommen wird und auf einer in diesen gebildeten Luftsäule schwingt und dabei abgebaut wird.

## Patentansprüche

1. Verfahren zur Herstellung eines Hitzeschildes (1) zum Abschirmen eines Gegenstandes gegen Hitze und/oder Schall mit wenigstens einer Metalllage (2) mit einer ersten und einer zweiten Oberfläche (20, 21), über wenigstens eine von denen eine Vielzahl von Noppen (3) vorsteht und worin zumindest ein Teil der Noppen sich von den übrigen Noppen in ihrer Größe unterscheidet, umfassend die Schritte:
- dreidimensionales Verformen eines Rohlings ohne regelmäßig gerastete Noppengröße und -verteilung,
- Erzeugen der Noppen (3) gleichzeitig mit der dreidimensionalen Verformung oder vorab in einem gesonderten Schritt.

2. Verfahren zur Herstellung eines Hitzeschildes nach Anspruch 1,
**dadurch gekennzeichnet,**
**dass** Noppen (3) erzeugt werden, die sich in ihrer Höhe (H) unterscheiden.

3. Verfahren zur Herstellung eines Hitzeschildes nach Anspruch 1 oder 2,
**dadurch gekennzeichnet,**
**dass** Noppen (3) erzeugt werden, die sich in ihrer Flächenausdehnung und/oder ihrer Flankensteilheit unterscheiden.

4. Verfahren zur Herstellung eines Hitzeschildes nach einem der vorhergehenden Ansprüche,
**dadurch gekennzeichnet,**
**dass** 30%, bevorzugt 40% der Fläche der Metalllage (2) mit Noppen versehen werden.

5. Verfahren zur Herstellung eines Hitzeschildes nach einem der vorhergehenden Ansprüche,
**dadurch gekennzeichnet,**
**dass** das Festlegen der Größe der Noppen (3) in Abhängigkeit von der lokalen Biegespannung in der Metalllage (2) erfolgt.

6. Verfahren zur Herstellung eines Hitzeschildes nach Anspruch 5,
**dadurch gekennzeichnet,**
**dass** die Größe der Noppen (3) so festgelegt wird, dass am Anbringungsort der jeweiligen Noppe (3) die Grenzspannung der Metalllage (2) nicht überschritten wird.

7. Verfahren zur Herstellung eines Hitzeschildes nach Anspruch 6,
**dadurch gekennzeichnet,**
**dass** das Festlegen der Grenzspannung unter Berücksichtigung der Zugfestigkeit des unverformten Ausgangsmaterials der Metalllage (2) erfolgt.

8. Verfahren zur Herstellung eines Hitzeschildes nach einem der Ansprüche 5 bis 7,
**dadurch gekennzeichnet,**
**dass** Noppen (3) erzeugt werden, deren Höhe (H) und/oder Flächenausdehnung und/oder Flankensteilheit mit zunehmender Biegespannung zunimmt.

9. Verfahren zur Herstellung eines Hitzeschildes nach einem der vorhergehenden Ansprüche,
**dadurch gekennzeichnet,**
**dass** Noppen (3) in Bereichen einer Biegespannung vor dem Einbringen der Noppen (3) von 50 bis 500 N/mm² und insbesondere von 60 bis 400 N/mm² erzeugt werden.

10. Verfahren zur Herstellung eines Hitzeschildes nach einem der vorhergehenden Ansprüche,
**dadurch gekennzeichnet,**
**dass** die Noppen (3) in der Weise erzeugt werden, dass die Biegespannung nach dem Einbringen der Noppen (3) in einem Bereich von 60 bis 300 N/mm² liegt.

11. Verfahren zur Herstellung eines Hitzeschildes nach einem der vorhergehenden Ansprüche,
**dadurch gekennzeichnet,**
**dass** die Höhe (H) der Noppen (3) in Abhängigkeit vom Abstand zu einer Wärmequelle, gegen die der abzuschirmende Gegenstand geschützt werden soll, festgelegt wird und insbesondere mit einer Verringerung des Abstandes zunimmt.

12. Verfahren zur Herstellung eines Hitzeschildes nach einem der vorhergehenden Ansprüche,
**dadurch gekennzeichnet,**
**dass** die Noppen (3) in der Weise erzeugt werden, dass sie wenigstens eine der folgenden Eigenschaften aufweisen:
- eine Höhe (H) von 1 bis 15 mm, insbesondere 3 bis 10 mm,
- eine Flächenausdehnung von 12 bis 1300 mm², insbesondere 25 bis 320 mm²,
- einen Durchmesser (B) von 2 bis 20 mm, insbesondere 3 bis 10 mm.

13. Verfahren zur Herstellung eines Hitzeschildes nach einem der vorhergehenden Ansprüche,
**dadurch gekennzeichnet,**
**dass** die Noppen (3) in der Weise erzeugt werden, dass sie wenigstens eine der folgenden Eigenschaften aufweisen:
- eine Höhe (H) von 2,5 bis 15 mm, insbesondere 3 bis 10 mm, im Bereich einer Biegespannung von 160 N/mm² bis 500 N/mm²,
- eine Höhe (H) von 1 bis 8 mm, insbesondere 3 bis 6 mm, im Bereich einer Biegespannung von kleiner als 120 N/mm²,
- eine Flächenausdehnung von 50 bis 1300 mm², insbesondere 110 bis 320 mm², im Bereich einer Biegespannung von 160 N/mm² bis 500 N/mm²,
- eine Flächenausdehnung von 12 bis 200 mm², insbesondere 25 bis 110 mm², im Bereich einer Biegespannung von kleiner als 120 N/mm²,
- einen Durchmesser (B) von 4 bis 20 mm, insbesondere 6 bis 10 mm, im Bereich einer Biegespannung von 160 N/mm² bis 500 N/mm²,
- einen Durchmesser (B) von 2 bis 8 mm, insbesondere 3 bis 6 mm, im Bereich einer Biegespannung von kleiner als 120 N/mm².

14. Verfahren zur Herstellung eines Hitzeschildes nach einem der vorhergehenden Ansprüche,
**dadurch gekennzeichnet,**
**dass** die Noppen (3) in der Weise erzeugt werden, dass sie wenigstens eine der folgenden Eigenschaften aufweisen:
- einen Flankenwinkel von 20 bis 90 °, insbesondere 30 bis 60 °, und
- einen Abstand der Noppenscheitelpunkte (31) von 3 bis 15 mm, insbesondere 6 bis 8 mm.

15. Verfahren zur Herstellung eines Hitzeschildes nach einem der vorhergehenden Ansprüche,
**dadurch gekennzeichnet,**
**dass** die Noppen (3) in der Weise erzeugt werden, dass zumindest ein Teil der Noppen (3) in Richtung der Biegebeanspruchung einen größeren Durchmesser (B) aufweist als quer zur Biegebeanspruchung und insbesondere oval ist.

16. Verfahren zur Herstellung eines Hitzeschildes nach einem der vorhergehenden Ansprüche,
**dadurch gekennzeichnet,**
**dass** 1 bis 10, insbesondere 1 bis 6, Noppen pro Quadratzentimeter der zweiten Metalllage (3) erzeugt werden.

17. Verfahren zur Herstellung eines Hitzeschildes nach einem der vorhergehenden Ansprüche,
**dadurch gekennzeichnet,**
**dass** der Hitzeschild in der Weise hergestellt wird, dass er eine zweite Metalllage (4) mit wenigstens einem gelochten Bereich (6) aufweist, wobei die Noppen (3) in Richtung auf die zweite Metalllage (4) weisen und ihre Scheitel (31) an der zweiten Metalllage (4) anliegen.

18. Verfahren zur Herstellung eines Hitzeschildes nach einem der Ansprüche 1 bis 16,
**dadurch gekennzeichnet,**
**dass** der Hitzeschild in der Weise hergestellt wird, dass er eine zweite Metalllage (4) aus einem unstrukturierten Blech aufweist, wobei die Noppen (3) in Richtung auf die zweite Metalllage (4) weisen und ihre Scheitel (31) an der zweiten Metalllage (4) anliegen.

## Claims

1. Method for the production of a heat shield (1) for shielding an object against heat and/or sound with at least one metallic layer (2) with a first and a second surface (20, 21) above at least one of which a plurality of dimples (3) protrudes and wherein at least some of the dimples are different in size from the other dimples, comprising the steps of
- three-dimensional deformation of a blank without regularly patterned size and distribution of the dimples,
- forming of the dimples (3) either simultaneously with the three-dimensional deformation or in a separate step beforehand.

2. Method for the production of a heat shield according to claim 1,
**characterized in that** dimples (3) are formed which are different in their height (H).

3. Method for the production of a heat shield according to claim 1 or 2, **characterized in that** dimples (3) are formed which are different with respect to their surface area and/or the steepness of their flanks.

4. Method for the production of a heat shield according to one of the preceding claims, **characterized in that** 30%, preferably 40% of the area of the metallic layer (2) are provided with dimples.

5. Method for the production of a heat shield according to one of the preceding claims, **characterized in that** the size of the dimples (3) is determined depending on the local bending stress in the metallic layer (2).

6. Method for the production of a heat shield according to claim 5, **characterized in that** the size of the dimples (3) is determined in such a way that the critical tension of the metallic layer (2) is not exceeded at the respective position of the dimple.

7. Method for the production of a heat shield according to claim 6, **characterized in that** the critical tension is determined dependent on the tensile strength of the non-deformed blank of the metallic layer (2).

8. Method for the production of a heat shield according to one of claims 5 to 7, **characterized in that** dimples (3) are formed the height and/or surface area and/or steepness of flanks of which increases with increasing bending stress.

9. Method for the production of a heat shield according to one of the preceding claims, **characterized in that** the dimples (3) are formed in those regions with a bending stress before formation of the dimples (3) between 50 and 500 N/mm², preferably between 60 and 400 N/mm².

10. Method for the production of a heat shield according to one of the preceding claims, **characterized in that** the dimples (3) are formed in such a way that the bending stress after the formation of the dimples (3) ranges between 60 and 300 N/mm².

11. Method for the production of a heat shield according to one of the preceding claims, **characterized in that** the height (H) of the dimples (3) is determined dependent on the distance to a source of heat against which the object to be shielded is protected and preferably that it increases with a reduction of this distance.

12. Method for the production of a heat shield according to one of the preceding claims, **characterized in that** the dimples (3) are produced in such a manner that they have at least one of the following properties:
- A height (H) of 1 to 15 mm, preferably 3 to 10 mm;
- A surface area of 12 to 1300 mm², preferably 25 to 320 mm²;
- A diameter (B) of 2 to 20 mm, preferably 3 to 10 mm.

13. Method for the production of a heat shield according to one of the preceding claims, **characterized in that** the dimples (3) are produced in such a manner that they have at least one of the following properties:
- A height (H) in the area with a bending stress of 160 N/mm² to 500N/ mm² of 2.5 to 15 mm, particularly 3 to 10 mm;
- A height (H) in an area with a bending stress of less than 120 N/mm² of 1 to 8 mm, preferably of 3 to 6 mm;
- A surface area in the area with a bending stress of 160 N/mm² to 500N/ mm² of 50 to 1300 mm², preferably of 110 to 320 mm²;
- A surface area in the area with a bending stress of less than 120 N/mm² of 12 to 200 mm², preferably of 25 to 110 mm²;
- A diameter (B) in the area with a bending stress of 160 N/mm² to 500N/ mm² of 4 to 20 mm, preferably 6 to 10 mm;
- A diameter (B) in the area with a bending stress of less than 120 N/mm² of 2 to 8 mm, preferably 3 to 6 mm.

14. Method for the production of a heat shield according to one of the preceding claims, **characterized in that** the dimples (3) are formed in such a way that they have at least one of the following properties:
- An angle of their flank between 20 and 90°, preferably 30 to 60°; and
- A distance between the crest points (31) of the dimples of 3 to 15 mm, preferably 6 to 8 mm.

15. Method for the production of a heat shield according to one of the preceding claims, **characterized in that** the dimples (3) are formed in such a way that at least some of the dimples (3) show a larger diameter (B) in the direction of the bending stress than transversal to the direction of the bending stress and that they are in particular oval.

16. Method for the production of a heat shield according to one of the preceding claims, **characterized in that** 1 to 10, in particular 1 to 6 dimples per square centimeter are formed in the second metallic layer.

17. Method for the production of a heat shield according to one of the preceding claims,
- **characterized in that** the heat shield is produced in such a manner that it comprises a second metallic layer (4) with at least one perforated area (6), and **in that** the dimples (3) point towards the second metallic layer (4) and their crests (31) butt against the second metallic layer (4).

18. Method for the production of a heat shield according to one of claims 1 to 16, **characterized in that** the heat shield is produced in such a manner that it comprises a second metallic layer made from non-structured metal sheet and **in that** the dimples (3) point towards the second metallic layer (4) and their crests (31) butt against the second metallic layer (4).

## Revendications

1. Procédé de réalisation d'un écran thermique (1) pour la protection d'un composant contre la chaleur et/ou le son avec au moins une feuille métallique (2) avec une première et une deuxième surface (20, 21), avec une multitude des picots qui ressortent depuis au moins une des surfaces (20, 21), dont au moins une partie des picots diffère des autres picots par rapport à leur taille, comprenant les étapes suivantes :
- déformation en trois dimensions d'un composant sans format régulier des picots au niveau de leurs taille et distribution,
- formation des picots (3) simultanément avec la déformation en trois dimensions ou au préalable lors d'une étape séparée.

2. Procédé de réalisation d'un écran thermique (1) selon la revendication 1, **caractérisé par le fait que** les picots (3) formés diffèrent dans leur hauteur (H).

3. Procédé de réalisation d'un écran thermique (1) selon une des revendications 1 ou 2, **caractérisé par le fait que** les picots (3) formés diffèrent dans leurs surface et/ou la pente de leurs flancs.

4. Procédé de réalisation d'un écran thermique (1) selon une des revendications précédentes, **caractérisé par le fait que** 30%, de préférence 40% de la surface de la feuille métallique (2) est couverte de picots (3).

5. Procédé de réalisation d'un écran thermique (1) selon une des revendications précédentes, **caractérisé par le fait que** la taille des picots (3) est dépendante de la contrainte locale de flexion de la feuille métallique (2).

6. Procédé de réalisation d'un écran thermique (1) selon la revendication 5, **caractérisé par le fait que** la taille des picots (3) est définie de telle manière que la contrainte limite de la feuille métallique n'est pas excédée dans la zone.

7. Procédé de réalisation d'un écran thermique (1) selon la revendication 6, **caractérisé par le fait que** la contrainte limite est définie en fonction de la résistance à la traction du matériau brut non déformé de la feuille métallique (2).

8. Procédé de réalisation d'un écran thermique (1) selon une des revendications 5 à 7, **caractérisé par** une formation des picots dont l'hauteur (H) et/ou la surface s'accroissent avec une contrainte de flexion croissante.

9. Procédé de réalisation d'un écran thermique (1) selon une des revendications précédentes, **caractérisé par le fait que** les picots (3) sont formés dans des régions où la contrainte de flexion est située entre 50 et 500 N/mm², de préférence entre 60 et 400 N/mm² avant la formation des picots.

10. Procédé de réalisation d'un écran thermique (1) selon une des revendications précédentes, **caractérisé par le fait que** les picots (3) sont formés de telle manière que la contrainte de flexion après la formation des picots se situe entre 60 et 300 N/mm².

11. Procédé de réalisation d'un écran thermique (1) selon une des revendications précédentes, **caractérisé par le fait que** l'hauteur (H) des picots est définie en fonction de la distance avec la source de chaleur contre laquelle le composant doit être écranté, en particulier avec une hauteur (H) qui croît lorsque la distance diminue.

12. Procédé de réalisation d'un écran thermique (1) selon une des revendications précédentes, **caractérisé par le fait que** les picots (3) sont formés de telle manière qu'ils possèdent au moins une des propriétés suivantes :
- une hauteur (H) entre 1 et 15 mm, en particulier entre 3 et 10 mm;
- une surface entre 12 et 1300 mm², en particulier entre 25 et 320mm²;
- un diamètre (B) entre 2 et 20 mm, en particulier entre 3 et 10 mm.

13. Procédé de réalisation d'un écran thermique (1) selon une des revendications précédentes, **caractérisé par le fait que** les picots (3) sont formés de telle manière qu'ils possèdent au moins une des propriétés suivantes :
- une hauteur (H) entre 2,5 et 15 mm, en particulier entre 3 et 10 mm dans une région avec une contrainte de flexion entre 60 et 300 N/mm²;
- une hauteur (H) entre 1 et 8 mm, en particulier entre 3 et 6 mm dans une région avec une contrainte de flexion de moins de 120 N/mm²;
- une surface entre 50 et 1300 mm², en particulier entre 110 et 320 mm² dans une région avec une contrainte de flexion entre 60 et 300 N/mm²;
- une surface entre 12 et 200 mm², en particulier entre 25 et 110 mm² dans une région avec une contrainte de flexion de moins de 120 N/mm²;
- un diamètre (B) entre 4 et 20 mm, en particulier entre 6 et 10 mm dans une région avec une contrainte de flexion entre 60 et 300 N/mm²;
- un diamètre (B) entre 2 et 8 mm, en particulier entre 3 et 6 mm dans une région avec une contrainte de flexion de moins de 120 N/mm².

14. Procédé de réalisation d'un écran thermique (1) selon une des revendications précédentes, **caractérisé par le fait que** les picots (3) sont formés de telle manière qu'ils possèdent au moins une des propriétés suivantes :
- un angle de flanc entre 20 et 90°, de préférence entre 30 et 60°, et
- une distance entre les points de sommet (31) des picots entre 3 et 15 mm, en particulier entre 6 et 8 mm.

15. Procédé de réalisation d'un écran thermique (1) selon une des revendications précédentes, **caractérisé par le fait que** les picots (3) sont formés de telle manière qu'au moins une partie des picots possède un diamètre plus grand dans la direction de la contrainte de flexion que dans la direction transversale à cette contrainte et que le picot est de forme ovale.

16. Procédé de réalisation d'un écran thermique (1) selon une des revendications précédentes, **caractérisé par le fait que** la deuxième feuille métallique comporte entre 1 et 10 picots par centimètre carré, en particulier entre 1 et 6 picots (3) centimètre carré.

17. Procédé de réalisation d'un écran thermique (1) selon une des revendications précédentes, **caractérisé par le fait que** l'écran est formé de telle manière qu'il possède une deuxième feuille métallique avec au moins une région perforée et que les picots (3) soient orientés vers la deuxième feuille métallique et que leurs commets (31) soient en contact contre la deuxième feuille métallique.

18. Procédé de réalisation d'un écran thermique (1) selon une des revendications précédentes, **caractérisé par le fait que** l'écran est formé de telle manière qu'il possède une deuxième feuille métallique formée d'une tôle non structurée et que les picots (3) soient orientés vers la deuxième feuille métallique et que leurs sommets (31) soient en contact contre la deuxième feuille métallique.
